# FASCICULE DE BREVET EUROPEEN

(11) **EP 2 103 579 B1**
(45) Date de publication et mention de la délivrance du brevet: **30.04.2014**
(21) Numéro de dépôt: 09155219.0
(22) Date de dépôt: 16.03.2009
(51) Int. Cl.: C04B 28/04, C04B 28/18

(54) **Liant de voirie à base de verre broyé et de métakaolin**
Bindemittel für den Straßenbau auf der Basis von zerstoßenem Glas und Metakaolin
Crushed glass and metakaolin based road binder

(30) Priorité: 19.03.2008 FR 0801514
(43) Date de publication de la demande: 23.09.2009
(73) Titulaire: Microsols Technologies, 33290 Blanquefort (FR)
(72) Inventeur: Combret, Jean-Michel, 31330 Grenade sur Garonne (FR); Salmon, Roland, 31170 Tournefeuille (FR); Cadeac, Eliane, 31170 Tournefeuille (FR)
(74) Mandataire: Cornuejols, Georges

(56) Documents cités:
- EP-A- 1 422 206
- FR-A- 2 800 089
- GB-A- 2 425 532
- BROOMFIELD, J. P.: "Corrosion of Steel in Concrete" 1997, E & FN SPON , LONDON AND NEW YORK , XP002502757 Appendix C: Strategic Highway Research Program; page 4
- MOISÉS FRIAS ROJAS & M.I. SÁNCHEZ DE ROJAS: "The effect of high curing temperature on the reaction kinetics in MK/lime and MK-blended cement matrices at 60°C" CEMENT & CONCRETE RESEARCH, vol. 33, 2003, pages 643-649, XP002502754
- FABIEN LAGIER, KIMBERLY E. KURTIS: "Influence of Portland cement composition on early age reactions with metakaolin" CEMENT AND CONCRETE RESEARCH, vol. 37, 2007, pages 1411-1417, XP022262400 ISSN: 0008-8846
- E. MOULIN, P. BLANC & D. SORRENTINO: "Influence of key chemical parameters on the properties of metakaolin blended cements" CEMENT & CONCRETE RESEARCH, vol. 23, 2001, pages 463-469, XP002502756

## Description

La présente invention appartient au domaine des revêtements des sols et plus particulièrement des liants de protection de la voirie.

Elle a pour objet un liant de voirie mettant en oeuvre conjointement de la poudre de verre et du métakaolin, en présence d'une quantité réduite de chaux et de ciment. Un autre objet de l'invention est un mortier ou un béton comprenant ledit liant.

Les liants de voirie doivent posséder des propriétés mécaniques indispensables à leur efficacité et à leur longévité. Ils doivent conférer aux sols une résistance mécanique élevée, tout en conservant une certaine élasticité, de sorte que les sols absorbent mieux les déformations causées par le passage répété de lourdes charges. Leur mise en oeuvre doit être simple et rapide afin de ne pas pénaliser le déroulement des chantiers. Pour la même raison, ils doivent être utilisables le plus tôt possible après leur application sur le sol. Ceci implique de conserver les propriétés requises à long terme, mais également de les acquérir très rapidement.

D'autres propriétés sont aussi recherchées, par exemple la capacité à assécher les sols, ce qui favorise le compactage et augmente la portance des sols. Les liants apportent en outre au sol traité une insensibilité au gel, ce qui permet de prolonger la durée de vie d'un revêtement. L'emploi de matériaux peu onéreux et possédant des qualités esthétiques est un critère supplémentaire de choix. Les exigences environnementales s'ajoutent désormais aux contraintes techniques et économiques.

Les liants de voirie s'utilisent pour traiter la plupart des sols en place ou rapportés (argiles, limons, sables, graves, etc.). Ils modifient leur nature et contribuent à l'amélioration de leur état. Un traitement avec un liant réduit la teneur en humidité d'un sol et prépare, le cas échéant, la pose d'un revêtement bitumeux. Les liants sont utilisés en chantiers routiers et pour réaliser des parkings, des pistes cyclables, des aires de stockages, des fonds de forme de route à fort trafic, des carrières pour chevaux, etc.

Ils sont communément composés de chaux hydraulique naturelle et de ciment. Le constituant principal du ciment est le clinker qui est obtenu à partir de la cuisson d'un mélange de 80% de calcaire (CaCO₃) et de 20% d'argiles (silicates d'alumine hydratés).

Après plusieurs broyages et homogénéisation, le cru est porté à une température allant de 700°C à 940°C où s'opère une décarbonatation du mélange, et c'est vers 1450°C qu'il y a clinkérisation. Le clinker est ensuite finement broyé avec du gypse (environ 5%) qui joue le rôle de régulateur de prise lors du gâchage avec l'eau.

Or, la production de ciment ne cessant d'augmenter en Europe et dans le monde, participant par là même de manière significative à l'émission de CO₂ dans l'atmosphère, il apparaît indispensable d'essayer de diminuer la consommation de clinker en trouvant des matériaux pouvant s'y substituer. Ce faisant il est nécessaire de conserver les propriétés spécifiques des liants routiers, telles que les résistances mécaniques ou la durabilité des revêtements.

Certaines études ont envisagé d'utiliser du verre brut, soit sous forme de granulat de type sable, soit sous forme de poudre fine, en substitution d'une partie du ciment. Par exemple, les déchets de verre de tubes cathodiques peuvent contribuer à réduire la consommation de clinker.

En 1998, une étude a mis en évidence l'intérêt d'utiliser les déchets de verre d'emballage en tant que liant dans la stabilisation des sols, formant en mélange avec le clinker, un "ciment de verre". L'optimum de réactivité du verre broyé a été déterminé en jouant sur la granulométrie de ce dernier et sur l'ajout de bases fortes (soude ou potasse). Il a été démontré que les résistances mécaniques des pâtes de ciment étaient faibles à court terme mais évoluaient de façon intéressante au-delà de cette période. Par la suite, une nouvelle étude a permis d'élaborer un liant plus performant à partir de poudre fine de verre en tant que constituant majoritaire, soit à hauteur d'au moins 70% du liant. L'emploi dans le domaine du génie civil de ce nouveau liant associant clinker et déchets de verre et présentant des performances globalement satisfaisantes en mise en oeuvre et en résistance, a permis de réduire les volumes du verre non recyclable, considéré jusque là comme déchet ultime et ne pouvant être pris en charge que par un Centre d'Enfouissement Technique.

Le document FR2800089A1 divulgue un procédé de stabilisation d'un sol, dans lequel on mélange un liant comprenant: du verre, de la chaux vive et de la soude, comme réactif basique.

Le document EP1422206A1 divulgue un liant hydraulique, destiné à constituer un béton/mortier décoratif. Le liant est constitué d'un mélange de clinker, ou ciment Portland, avec au moins 50% d'au moins une variété de verre silicaté industriel, à l'état finement broyé.

Cependant, on a vu que bien que la résistance de ces liants soit correcte à long terme, elle reste à un niveau moyen par rapport aux liants conventionnels, et surtout elle est basse dans la période initiale. Le temps de prise à respecter pour obtenir une résistance suffisante avant une mise en circulation de véhicules sur le sol traité est élevée, ce qui amène des contraintes difficiles à supporter pour la conduite des chantiers.

Il est apparu nécessaire de mettre au point un liant de voirie qui améliore les propriétés mécaniques des "ciments de verre" à court terme, tout en conservant ou même en améliorant leurs propriétés mécaniques à long terme.

La présente invention a pour but de répondre à ce besoin, afin de proposer un liant aux performances améliorées applicable en technique routière, qui respecte les normes mécaniques, mais aussi écologiques. La solution adoptée repose sur l'utilisation conjointe de poudre de verre et de métakaolin, en présence d'une quantité réduite de chaux et de ciment. Les constituants sélectionnés ont permis d'obtenir des liants à prise rapide et présentant une excellente résistance mécanique à court et à long terme. Ces constituants doivent de préférence être apportés dans des proportions définies, prises dans une fourchette de valeurs sélectionnées. De manière inattendue, il a été trouvé que les valeurs optimums régissant les proportions de chaque ingrédient dans le liant, ne sont pas les valeurs extrêmes. Dans ces conditions, aucune interaction néfaste entre les constituants n'est observée.

Il a donc été nécessaire, pour améliorer les performances actuelles des liants routiers, de modifier de manière fondamentale leur formulation. Ceci a pu être réalisé en améliorant le caractère écologique et aussi l'aspect économique du matériau final. En effet, l'utilisation d'un liant dans lequel une grande partie du ciment est substituée par du métakaolin a un avantage économique et environnemental, puisque la production d'une tonne de ciment produit une tonne de CO₂ alors que la production de métakaolin en produit uniquement par l'apport énergétique nécessaire à la calcination. De même la valorisation des déchets ultimes de verre dans une application routière évite le stockage en CET.

La présente invention a ainsi pour objet un liant de voirie, comprenant du verre broyé, du métakaolin, du ciment et de la chaux, la teneur pondérale totale en verre broyé et métakaolin étant comprise entre 70% et 90%, par rapport au liant sec.

Le métakaolin, de formule Al₂Si₂O₇, est produit par calcination des matériaux argileux : il provient de la deshydroxylation de la kaolinite entre 500 et 650°C. Immédiatement après sa formation, le métakaolin contient encore 10% de ses groupements OH de départ. Ceux-ci s'éliminent progressivement avec la montée en température jusqu'à 980°C.

Le verre broyé se présente sous la forme d'une poudre de granulométrie classiquement comprise entre 10 µm et 35 µm, mais pouvant aller de 5 µm à 100 µm sans gêner la réalisation de l'invention.

Le ciment et la chaux sont choisis parmi les produits communément employés dans le domaine des liants destinés à la préparation des mortiers et des bétons. On peut utiliser par exemple du clinker (ciment Portland) en mélange avec de la chaux vive.

On notera que les composants du liant ici décrit sont considérés sous leur forme pulvérulente, compte non tenu de l'eau qui sera ajoutée pour former par malaxage une pâte, généralement dans un mortier ou un béton. Le terme "liant" recouvre quant à lui l'ensemble des composants à l'état sec. Lorsqu'un mortier est préparé, le liant (conforme à l'invention ou classiquement composé de ciment et/ou de chaux éteinte), est malaxé avec du sable et de l'eau. C'est au contact de l'eau que la prise du liant s'opère.

On appelle A, la teneur pondérale totale en verre broyé et métakaolin dans le liant sec, c'est-à-dire la somme de la teneur pondérale en verre broyé V et de la teneur pondérale en métakaolin MK. On peut donc écrire l'égalité A = V+MK, avec selon l'invention, la relation 70% ≤ A ≤ 90%.

Dans un mode de réalisation préféré, la teneur pondérale totale en verre broyé et métakaolin dans le liant de voirie selon l'invention est comprise entre 75% et 80%, par rapport au liant sec, c'est-à-dire qu'on a la relation 75% ≤ A ≤ 80%.

Selon une caractéristique avantageuse du liant de voirie objet de l'invention, la teneur pondérale en verre broyé V et la teneur pondérale en métakaolin MK sont dans un rapport V/MK allant de 20/80 à 60/40. On a ainsi la relation 20/80 ≤ V/MK ≤ 60/40.

De préférence, la teneur pondérale en verre broyé V et la teneur pondérale en métakaolin MK du liant de voirie selon l'invention sont dans un rapport V/MK allant de 45/55 à 55/45, pouvant s'exprimer par la relation 45/55 ≤ V/MK ≤ 55/45. Encore de préférence ce rapport est de 50/50, soit V/MK = 50/50.

Selon une caractéristique intéressante de l'invention, la teneur pondérale en ciment Ci et la teneur pondérale en chaux Ch sont dans un rapport Ci/Ch allant de 1/2 à 2/1.

Selon un mode de réalisation avantageux, le liant de voirie selon l'invention comprend, en teneur pondérale dans le liant sec :
- de 10% à 45% de verre broyé,
- de 25% à 70% de métakaolin,
- de 1% à 20% de ciment, et
- de 1% à 20% de chaux.

Selon un mode de réalisation préféré, le liant objet de l'invention comprend, en teneur pondérale dans le liant sec :
- de 30% à 40% de verre broyé,
- de 30% à 50% de métakaolin,
- de 5% à 10% de ciment,
- de 10% à 20% de chaux.

Selon une variante particulièrement préférée de réalisation, le liant objet de l'invention comprend, en teneur pondérale dans le liant sec, 38% de verre broyé, 38% de métakaolin, 8% de ciment, et 16% de chaux.

Selon une autre caractéristique du liant de voirie selon l'invention, le métakaolin peut contenir de 60% à 70% de silice SiO₂, et de 25% à 40% d'oxyde d'aluminium Al₂O₃.

De préférence, le verre broyé entrant dans la composition du liant selon la présente invention est un verre silicaté sodo-calcique. En effet, ce type de verre a une réactivité plus importante qu'un verre de silice pure en raison de sa teneur en cations. Cette propriété est ici mise à profit pour valoriser les déchets ultimes de verre d'emballage (dits verres creux), de pare-brises ou de verre plat vitrier de la déconstruction, puisque ces verres sont le plus souvent sodo-calciques. En moyenne, ils sont composés de 75% de SiO₂, 15% de Na₂O et 10% de CaO. Bien évidement, ces chiffres peuvent varier en fonction des propriétés que l'on veut donner au verre et donc aux différents oxydes introduits (Al₂O₃, BO₃...) appelés alors modificateurs.

Selon une caractéristique intéressante, le verre broyé entrant dans la composition du liant selon la présente invention peut être choisi parmi les verres à caractère hydrophobe ou les verres à caractère hydrophile. En effet, le caractère hydrophile confère au liant une mouillabilité plus élevée des poudres, ce qui améliore la résistance en compression à long terme et l'ampleur du retrait. Le caractère hydrophobe, quant à lui, peut constituer un atout pour certaines applications, car en ayant plus d'eau disponible pour l'hydratation du ciment, on peut augmenter les résistances mécaniques à jeune âge et dans le cas d'un liant routier, raccourcir le délai de circulabilité du sol traité.

L'invention propose donc un nouveau liant respectant le cahier des charges propre à une application en technique routière, qu'on peut qualifier d'écoliant hydraulique et pouzzolanique. L'originalité du travail a consisté à utiliser du métakaolin comme constituant principal avec, comme constituant secondaire, des verres sodo-calciques broyés provenant de déchets ultimes de verre d'emballage, en définissant les conditions physico-chimiques conduisant à une réactivité maximale du verre et exprimant les propriétés pouzzolaniques du métakaolin.

Est également objet de la présente invention un mortier destiné à une application routière, lequel est constitué de sable et d'eau en mélange avec un liant selon l'invention, tel qu'il vient d'être décrit. Un tel mortier comprend donc du verre broyé, du métakaolin, du ciment et de la chaux, la teneur pondérale totale en verre broyé et métakaolin étant comprise entre 70% et 90%, par rapport au liant sec. Un mortier incorporant du gravier pour former un béton est également inclus par définition dans la présente invention.

Selon un mode préféré de réalisation du mortier selon l'invention, le rapport des volumes d'eau et de liant est compris entre 0,5 et 1,5. On sait que le métakaolin possède une surface spécifique d'environ 15m²/g, ce qui change la rhéologie des bétons les incorporant par rapport à des bétons classiques. Les mélanges contenant du métakaolin sont donc plus secs que les bétons classiques, et de ce fait, il faut augmenter la quantité d'eau apportée lors de la gâchée pour obtenir la fluidité voulue. Il est aussi envisageable d'additionner un plastifiant réducteur d'eau.

Selon une autre caractéristique de l'invention, le sable servant à préparer le mortier peut être du sable siliceux ou du sable calcaire.

Différentes compositions de béton ont été testées pour leur résistance à la compression à différents intervalles de temps après leur préparation. Ces tests, conduits en conditions contrôlées, sur des bétons normalisés et non normalisés, ont mis en évidence les performances améliorées du liant objet de l'invention, par comparaison avec un liant standard. Différentes cinétiques d'augmentation de la résistance à la compression ont été observées. Toutes les formulations répondant à la définition de la présente invention donnent de meilleurs résultats que la référence à 7 jours, et la plupart confirment cette supériorité à 28 jours. Nous avons donc une amélioration nette des résultats.

Le mortier objet de l'invention, tel qu'il vient d'être décrit, est ainsi particulièrement adapté à une utilisation dans une application au traitement des sols et des chaussées.

La présente invention sera mieux comprise, et des détails en relevant apparaîtront, à la lumière de la description qui va être faite de différentes variantes de réalisation, en relation avec les figures annexées, dans lesquelles :
- La figure 1 représente les variations des résistances mécaniques en compression en fonction du temps de différentes formulations de mortiers selon l'invention.
- Les figures 2 et 3 sont les diffractogrammes des rayons X de pâte des formulations Fa et Fe, trois heures après malaxage.
- Les figures 4 et 5 sont les diffractogrammes des rayons X de pâte confectionnée avec les formulations Fa et Fe, 7 jours après le malaxage.
- Les figures 6 et 7 sont les diffractogrammes de la pâte confectionnée avec les formulations Fa et Fe, au bout de 28 jours après la fabrication.

### EXEMPLE 1 - Composition des mortiers

Des mortiers selon l'invention ont été préparés à partir des ingrédients suivants :
- Ciment
Le ciment utilisé est du ciment LAFARGE 52.5 R provenant de l'usine de Martres-Tolosane (31).
- Chaux
chaux vive, pure à 92% minimum, conforme aux produits du commerce.
- Verre
Le verre utilisé provient de déchets de verre creux sodo-calcique de composition moyenne SiO₂: 75%, Na₂O : 15%, et CaO : 10%, réduit en poudre par broyage.
La poudre de verre a été caractérisée par les trois paramètres : d₁₀, d₅₀ et d₉₀, qui représentent le diamètre des particules de l'échantillon pour lequel, respectivement 10%, 50% et 90% de celles-ci ont un diamètre inférieur à cette dimension. Le d₅₀ est le paramètre retenu généralement pour caractériser une poudre.

| d₁₀ | d₅₀ | d₉₀ |
|---|---|---|
| 7 µm | **24,8 µm** | 91 µm |

- Métakaolin
Le métakaolin utilisé provient de l'usine ARGECO de Fumel (47). Il est composé principalement de SiO₂ (entre 60% et 70%), de Al₂O₃ (entre 25% et 40%), ainsi que de Fe₂O₃, TiO₂ et K₂O en très faibles quantités. Il a une masse volumique de 2,6 ± 0,1 g/cm³ et une surface spécifique ≥ 15 m²/g.
- Granulats
Le sable siliceux 0/6 recomposé vient de la sablière MALET de Portet-Sur-Garonne (31). Il est composé de sable fillérisé 0/2 d'origine alluvionnaire, ayant une masse volumique réelle de 2670 kg/m³, et d'un sable concassé lavé 2/6,3 également d'origine alluvionnaire, de masse volumique réelle 2680 kg/m³. Ces sables sont habituellement destinés à une utilisation pour les chaussées et plus précisément pour les couches de roulement à liants hydrocarbonés.

Le sable calcaire 0/6 recomposé provient de la carrière BERNADETS d'Aurignac (31). Il est composé de sable calcaire 0/4 concassé, ayant une masse volumique réelle de 2599 kg/m³, et d'un sable 2/5,6 concassé, avec une masse volumique de 2600 kg/m³.

La composition des six mortiers préparés est la suivante :
- sable = 1350 g ± 5 g.
- liant = 450 g ± 2 g.
- eau de gâchage = 225 g ± 1 g (le rapport eau/liant est donc 0,50).

Les compositions des six phases liantes (notées Fa à Ff), pour les six mortiers (désignés Ma à Mf) sont présentées dans le tableau 1. (V : verre ; MK : métakaolin ; CaO : chaux).

**TABLEAU 1**

| | **Fa** | **Fb** | **Fc** | **Fd** | **Fe** | **Ff** |
|---|---|---|---|---|---|---|
| **%V** | 38% | 43% | 19% | 38% | 19% | 21% |
| **%MK** | 38% | 43% | 53% | 38% | 53% | 64% |
| **%Ciment** | 8.33% | 5% | 8.33% | 16.67% | 16.67% | 5% |
| **%CaO** | 16.67% | 10% | 16.67% | 8.33% | 8.33% | 10% |

### EXEMPLE 2 - Tests de résistance en compression

Nous avons mesuré la résistance mécanique en compression des mortiers Ma à Mf préparés conformément aux formules de l'exemple 1, avec le sable siliceux de granulométrie 0/6, à différentes échéances : 7 jours, 28 jours, 56 jours et enfin 90 jours.

### 1) - Procédure de fabrication des mortiers

Introduire l'eau dans la cuve du malaxeur ; y verser ensuite le liant ; mettre le malaxeur en marche à vitesse lente. Après 30 secondes de malaxage, introduire le sable en 30 secondes, régulièrement. Mettre alors le malaxeur à sa vitesse rapide et continuer le malaxage pendant 30 secondes supplémentaires. Arrêter le malaxeur pendant 90 secondes. Pendant les 15 premières secondes, enlever au moyen d'une raclette en caoutchouc tout le mortier adhérant aux parois et au fond du récipient en le repoussant vers le milieu de celui-ci. Reprendre ensuite le malaxage à grande vitesse pendant 60 secondes.

### 2) - Confection des éprouvettes et conservation

La norme EN 196-1 en décrit de manière détaillée le mode opératoire. Avec chaque mortier préparé comme indiqué ci-dessus, remplir un moule 4 x 4 x 16. Le serrage du mortier dans ce moule est obtenu en introduisant le mortier en deux fois et en appliquant au moule 60 chocs à chaque fois. Après quoi le moule est arasé, recouvert d'une plaque de verre et entreposé dans une salle maintenue à 20° C ± 2° C. Le démoulage a lieu 48h après le début du malaxage et la conservation se fait dans un sac en plastique étanche de manière à avoir un milieu endogène, dans la salle maintenue à 20° C ± 2° C.

### Le témoin Ft

Une série d'éprouvettes témoins a été confectionnée avec un "ciment de verre" du commerce, à savoir un ciment préparé à partir du liant "ECO'STABIL®" de la société ESPORTEC, selon le mode opératoire décrit précédemment. Il est composé de 75% de verre, 15% de ciment 52.5 R et 10% de chaux vive.

### 3) - Méthode de mesure de la résistance à la compression en fonction du temps

L'équipement nécessaire pour la mesure de la résistance à la compression Rc des éprouvettes de mortier est décrit de manière détaillée par la norme EN 196-1. Il est essentiellement constitué d'une machine d'essais à la compression permettant d'appliquer des charges jusqu'à 150 KN (ou plus si les essais l'exigent) avec une vitesse de mise en charge de 2400 N/s ± 200 N/s.

La mesure est réalisée avec 6 répétions pour chaque composition. Les résultats obtenus pour chacun des 6 essais sont arrondis à 0,1 MPa près et on en fait la moyenne. Si l'un des 6 résultats diffère de ±10 % de cette moyenne, il est écarté et la moyenne est alors recalculée à partir des 5 résultats restants. Si un des 5 résultats s'écarte de ±10 % de cette nouvelle moyenne, la série des 6 mesures est écartée et une nouvelle série de 6 éprouvettes est préparée en respectant soigneusement le protocole. Lorsque le résultat est satisfaisant, la moyenne ainsi obtenue est la résistance du ciment à l'âge considéré.

Les normes ENV 197-1 et NFP 15-301 définissent les classes de résistance des ciments d'après leur résistance à 7 jours et 28 jours. Ces âges sont donc impératifs pour vérifier la conformité d'un ciment. Au jour prévu, les éprouvettes sont rompues en compression.

### 4) - Résultats

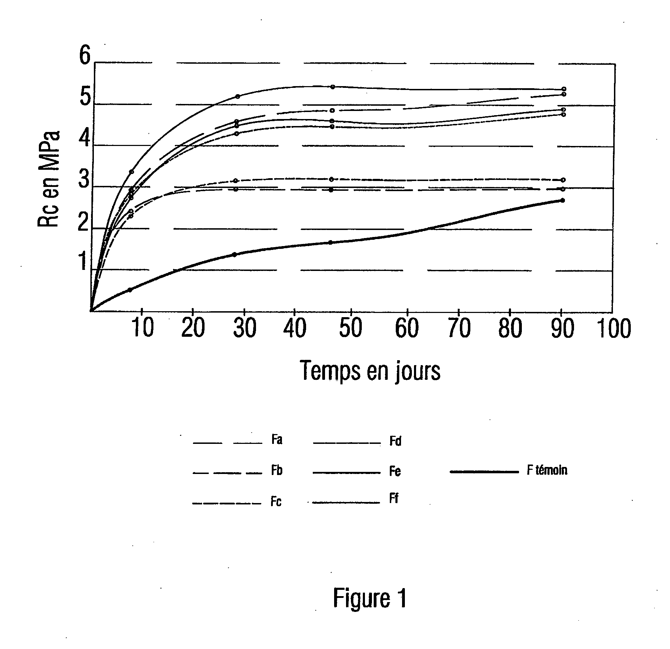

Les résistances mécaniques en compression en fonction du temps obtenues avec les formulations Fa à Ff et la formulation témoin Ft, sont reportées dans le tableau 2 et présentées sur la Figure 1.

**TABLEAU 2**

| | **Ft** | **Fa** | **Fb** | **Fc** | **Fd** | **Fe** | **Ff** |
|---|---|---|---|---|---|---|---|
| **Rc 7j** | 0,5 | 2,8 | 2,4 | 3,3 | 2,7 | 2,7 | 2,3 |
| **Rc 28j** | 1,4 | 4,6 | 2,9 | 5,2 | 4,3 | 4,3 | 3,2 |
| **Rc 56j** | 1,8 | 4,9 | 3,0 | 5,4 | 4,5 | 4,5 | 3,2 |
| **Rc 90j** | 2,8 | 5,3 | 3,0 | 5,4 | 4,8 | 4,8 | 3,2 |

En premier lieu, il est constaté une amélioration des résistances en compression de toutes les formules. Ceci est vrai sur le long terme, puisque après 90 jours de prise, les compressions sont supérieures à celle de la formule de référence. Certaines formules montrent en outre un potentiel d'accroissement supplémentaire avec des courbes de pente positive. Ceci est également vrai à court terme très rapidement après le coulage, avec des pentes d'évolution de la résistance très fortes dès les premiers jours et jusqu'à 30 jours.

Un optimum de substitution du verre par le métakaolin est de l'ordre de 50%. Le pourcentage de la quantité (ciment + chaux) a aussi une influence. Plus il est élevé dans la composition, plus la résistance est importante. Ceci pourrait être attribué à la formation rapide des produits d'hydratation du ciment d'une part, et à la réserve en chaux nécessaire à la réaction pouzzolanique d'autre part.

Ces résultats répondent aux objectifs en vue de la création d'un nouveau produit sur le marché des écoliants à base de métakaolin et de poudre de verre.

### EXEMPLE 3 - Influence de la nature du sable

La résistance mécanique en compression a été testée pour des mortiers dans lesquels le sable siliceux a été remplacé par un sable calcaire, également de granulométrie 0/6. Les proportions de liant et d'eau sont les mêmes. Les formulations testées sont celles dans lesquelles le rapport V/MK = 1. Les valeurs de la résistance en compression à 28 jours (Rc 28j, exprimée en MPa) sont reportées dans le tableau 3.

**TABLEAU 3**

| **Formulation** | **Sable Siliceux** | **Sable Calcaire** |
|---|---|---|
| **Fa** | 4.6 | 4.9 |
| **Fb** | 2.9 | 2.8 |
| **Fe** | 4.3 | 4.3 |

Il apparaît que les résultats de résistance en compression des éprouvettes de mortier contenant du sable siliceux ou calcaire sont très proches. Les mortiers selon l'invention peuvent donc être préparés indifféremment avec ces deux types de sable.

### EXEMPLE 4 - Impact environnemental du ciment et de la chaux

L'analyse par diffraction des rayons X permet de suivre l'apparition et l'évolution des produits d'hydratation dans les pâtes confectionnées.

Les deux formulations Fa et Fd ont été retenues. Elles contiennent les mêmes pourcentages de verre et de métakaolin (38% de chaque), la différence résidant dans les taux de ciment et de chaux (pour Fa : 8.33% de ciment et 16.67% de chaux, et l'inverse pour Fd, soit 16.67% de ciment et 8.33% de chaux).

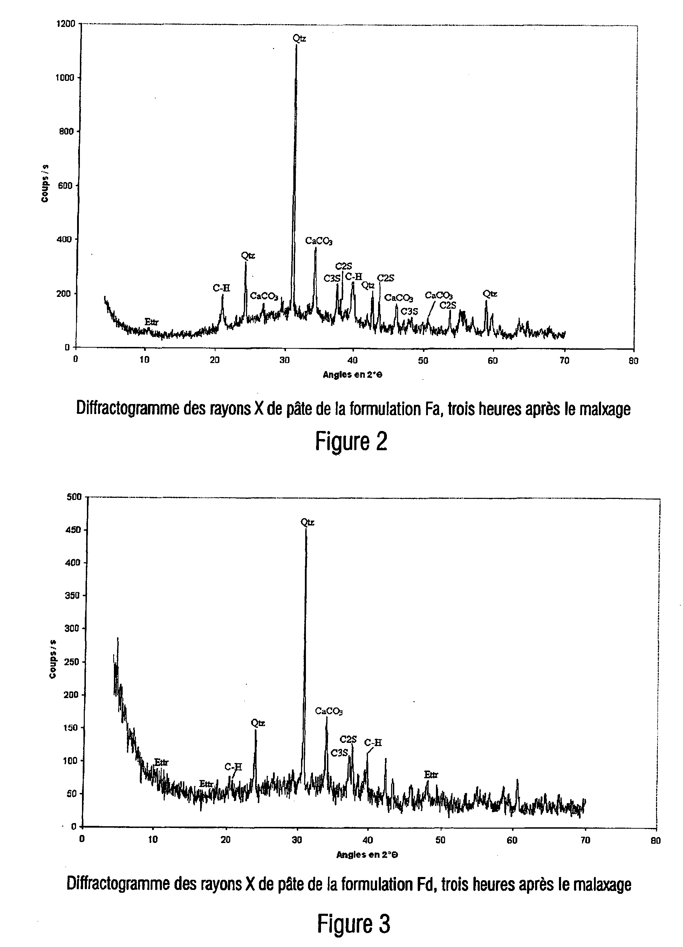

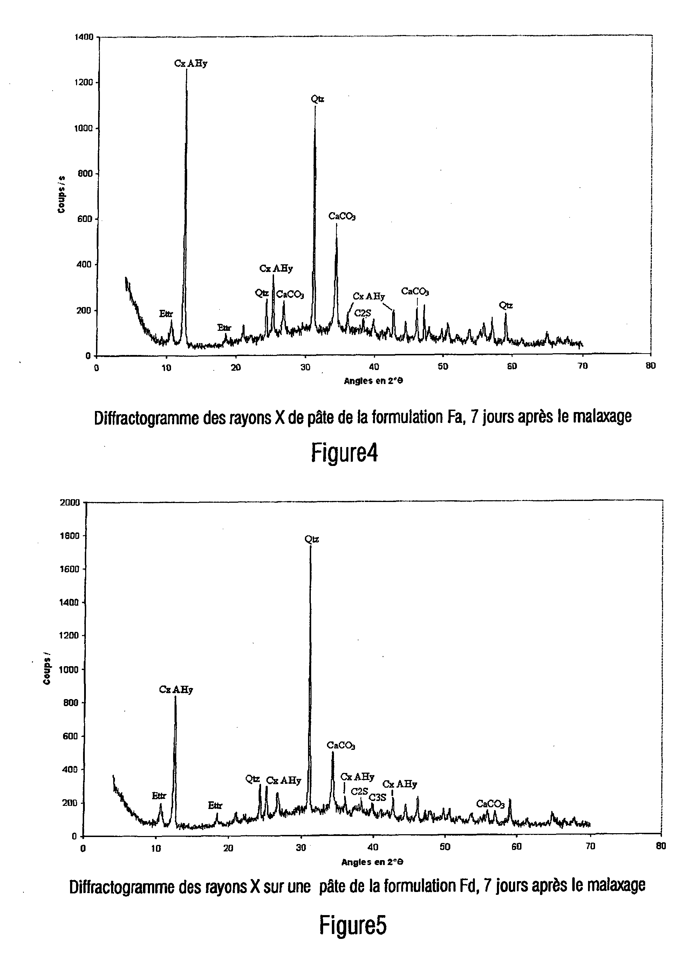

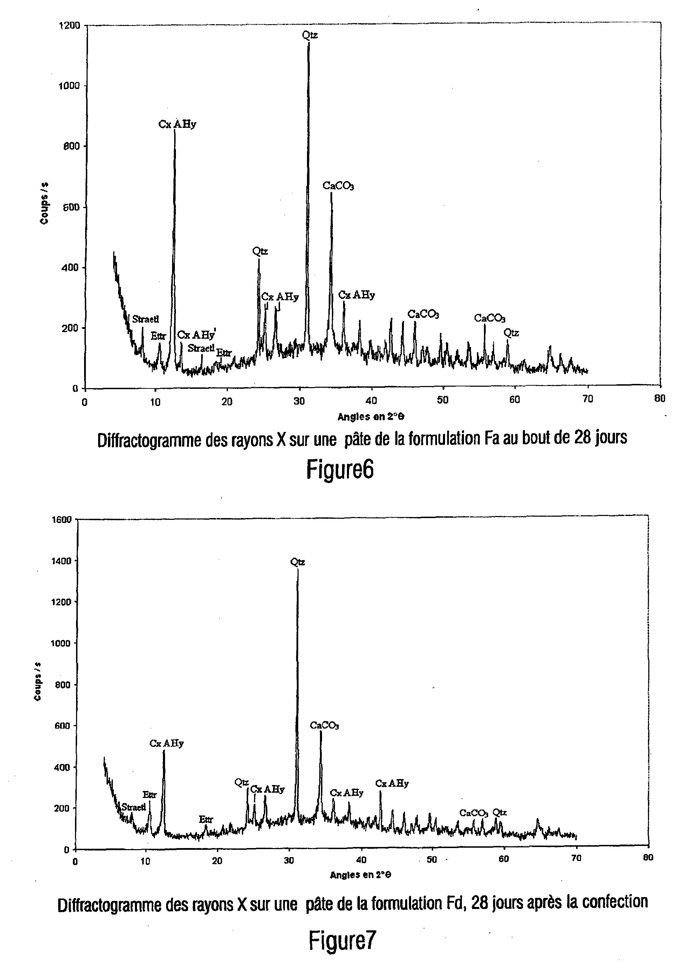

Deux échantillons de pâte, c'est-à-dire de liant additionné d'eau, sans sable, ont été analysés, les analyses sur mortier ne montrant que les pics caractéristiques du quartz et du sable. Les mesures sont réalisées à trois échéances : 3 heures après la confection des pâtes, puis 7 jours et 28 jours, avec une conservation en milieu endogène. Les diffractogrammes correspondants sont présentés aux figures 2 à 7.

On utilisera ici les notations particulières adoptées en chimie des ciments. Les oxydes sont désignés par des lettres : **C** pour CaO, **S** pour SiO₂, **A** pour Al₂O₃, **F** pour Fe₂O₃ et H pour H₂O. Ainsi, on note :
le silicate tricalcique : **C₃S**
le silicate bicalcique : **C₂S**
la portlandite Ca(OH)₂ : **C-H**
les aluminates calciques hydratés de divers degrés : CₓAH_{y}

### 1) - Formulations Fa et Fd, trois heures après malaxage

Pour les deux formulations, trois heures après l'hydratation et le malaxage de la pâte, sont visibles les pics caractéristiques du quartz (SiO₂), principalement apporté par le métakaolin, mais aussi le "bombement" dû au verre. Se distinguent également les pics de la calcite (CaCO₃), due à la carbonatation de la chaux à l'air, ainsi que les pics des principaux constituants anhydres du ciment : le silicate tricalcique (C₃S), le silicate bicalcique (C₂S). Nous avons pu déceler de la portlandite (C-H) et un petit peu d'ettringite qui se forment rapidement lors de l'hydratation.

A ce stade, les deux pâtes contiennent les mêmes produits mais dans des proportions différentes, en relation avec la quantité de chaux entrant dans les formulations.

### 2) - Formulations Fa et Fd, 7 jours après le malaxage

Après 7 jours, il est toujours possible de distinguer pour les deux formulations, le bombement dû au verre, et la quantité importante de quartz et de calcite. Cependant, les pics des constituants anhydres du ciment ne sont quasiment plus décelables, il ne reste que de faibles traces de silicate bicalcique. L'ettringite voit sa quantité augmenter tandis qu'un aluminate de calcium hydraté (CₓAH_{y}) apparait en quantité très importante, résultat de la consommation des composés anhydres et hydratés du ciment par les réactions pouzzolaniques.

### 3) - Formulations Fa et Fd, 28 jours après le malaxage

Au bout de 28 jours après le début de prise des pâtes, les diffractogrammes des rayons X montrent les mêmes composants qu'à 7 jours, à savoir le quartz, la calcite, l'ettringite et l'aluminate de calcium. Le pourcentage d'ettringite a légèrement augmenté pour l'échantillon Fd. On peut cependant remarquer que le silicate bicalcique n'apparaît plus sur le diagramme, mais un autre aluminate de calcium hydraté, différent de celui qui était apparu à 7 jours, devient décelable. Cette nouvelle phase cristallisée, désormais visible, correspond à la straetlingite, de formule Ca₂Ai₂SiO₇,8H₂O (soit selon la notation cimentière C₂ASH₈).

Le tableau **4** résume l'évolution de la quantité des composés décelés sur les diffractogrammes des rayons X des deux pâtes confectionnées avec les deux formulations Fa et Fd aux différentes échéances.

**TABLEAU 4**

| | **Fa** | | | **Fd** | | |
|---|---|---|---|---|---|---|
| **Types de composés** | **3 heures** | **7 jours** | **28 jours** | **3 heures** | **7 jours** | **28 jours** |
| SiO₂ | + + + + | + + + + | + + + + | + + + + | + + + + | + + + + |
| CaCO₃ | + + + | + + + | + + + | + + + | + + + | + + + |
| C₂S | + + | + | / | + + | + | / |
| C₃S | + + | / | / | + + | + | / |
| C-H | + + | / | / | + + | / | / |
| CₓAH_{y} | / | + + + | + + + | / | + + + | + + + |
| Ettringite | + | + + | + + | + | + + | + + |
| Straetlingite | / | / | + + | / | / | + |

| | | | | | | |
|---|---|---|---|---|---|---|
| Présence très importante : + + + + ; Présence importante : + + + ; Présence moyenne : + + ; Traces : + ; Absence : / | | | | | | |

### CONCLUSIONS

Les informations obtenues par ces analyses quant aux produits formés par l'apport du métakaolin et du verre, permettent de dégager ceux qui sont responsables de la prise et de l'accroissement de la résistance mécanique du liant et du mortier objets de l'invention.

Grâce à l'observation de l'évolution des produits des réactions d'hydratation, il est établi qu'on ne trouve plus trace après 28 jours du C₃S ni du C₂S. Ceci montre que le ciment et la chaux ont été consommés en totalité, ce qui est un indice tout à fait positif en ce qui concerne l'impact sur l'environnement du liant selon l'invention.

## Revendications

1. Liant de voirie, **caractérisé en ce qu'**il comprend du verre broyé, du métakaolin, du ciment et de la chaux, la teneur pondérale totale en verre broyé et métakaolin étant comprise entre 70% et 90%, par rapport au liant sec.

2. Liant de voirie selon la revendication 1, **caractérisé en ce que** la teneur pondérale totale en verre broyé et métakaolin est comprise entre 75% et 80%, par rapport au liant sec.

3. Liant de voirie selon la revendication 1 ou 2, **caractérisé en ce que** la teneur pondérale en verre broyé V et la teneur pondérale en métakaolin MK sont dans un rapport V/MK allant de 20/80 à 60/40.

4. Liant de voirie selon la revendication précédente, **caractérisé en ce que** la teneur pondérale en verre broyé V et la teneur pondérale en métakaolin MK sont dans un rapport V/MK allant de 45/55 à 55/45, et de préférence de 50/50.

5. Liant de voirie selon l'une des revendications précédentes, **caractérisé en ce que** la teneur pondérale en ciment Ci et la teneur pondérale en chaux Ch sont dans un rapport Ci/Ch allant de 1/2 à 2/1.

6. Liant de voirie selon l'une des revendications précédentes, **caractérisé en ce qu'**il comprend, en teneur pondérale dans le liant sec :
- de 10% à 45% de verre broyé,
- de 25% à 70% de métakaolin,
- de 1 % à 20% de ciment, et
- de 1 % à 20% de chaux.

7. Liant de voirie selon la revendication précédente, **caractérisé en ce qu'**il comprend, en teneur pondérale dans le liant sec :
- de 30% à 40% de verre broyé, de préférence 38%,
- de 30% à 50% de métakaolin, de préférence 38%,
- de 5% à 10% de ciment, de préférence 8%, et
- de 10% à 20% de chaux, de préférence 16%.

8. Liant de voirie selon l'une des revendications précédentes, **caractérisé en ce que** le métakaolin contient de 60% à 70% de silice SiO₂, et de 25% à 40% d'oxyde d'aluminium Al₂O₃.

9. Liant de voirie selon l'une des revendications précédentes, **caractérisé en ce que** le verre broyé est un verre silicaté sodo-calcique.

10. Liant de voirie selon l'une des revendications précédentes, **caractérisé en ce que** le verre broyé est choisi parmi les verres à caractère hydrophobe ou les verres à caractère hydrophile.

11. Mortier destiné à une application sur voirie, **caractérisé en ce qu'**il est constitué de sable et d'eau en mélange avec un liant selon l'une des revendications précédentes.

12. Mortier selon la revendication précédente, **caractérisé en ce que** le rapport des volumes eau / liant est compris entre 0,5 et 1,5.

13. Mortier selon la revendication 11 ou 12, **caractérisé en ce que** le sable est du sable siliceux ou du sable calcaire.

14. Application d'un mortier selon l'une des revendications 11 à 13 au traitement des sols et des chaussées.

## Patentansprüche

1. Bindemittel für den Straßenbau, **dadurch gekennzeichnet, dass** es zerkleinertes Glas, Metakaolin, Zement und Baukalk umfasst, wobei der gewichtsmäßige Gesamtgehalt an zerkleinertem Glas und Metakaolin im Bereich von 70 % bis 90 % liegt, bezogen auf das wasserfreie Bindemittel.

2. Bindemittel für den Straßenbau nach Anspruch 1, **dadurch gekennzeichnet, dass** der gewichtsmäßige Gesamtgehalt an zerkleinertem Glas und Metakaolin im Bereich von 75 % bis 80 % liegt, bezogen auf das wasserfreie Bindemittel.

3. Bindemittel für den Straßenbau nach Anspruch 1 oder 2, **dadurch gekennzeichnet, dass** der gewichtsmäßige Gehalt an zerkleinertem Glas V und der gewichtsmäßige Gehalt an Metakaolin MK ein Verhältnis V/MK aufweisen, das im Bereich von 20/80 bis 60/40 liegt.

4. Bindemittel für den Straßenbau nach dem vorhergehenden Anspruch, **dadurch gekennzeichnet, dass** der gewichtsmäßige Gehalt an zerkleinertem Glas V und der gewichtsmäßige Gehalt an Metakaolin MK ein Verhältnis V/MK aufweisen, das im Bereich von 45/55 bis 55/45 liegt und vorzugsweise 50/50 beträgt.

5. Bindemittel für den Straßenbau nach einem der vorhergehenden Ansprüche, **dadurch gekennzeichnet, dass** der gewichtsmäßige Gehalt an Zement Ci und der gewichtsmäßige Gehalt an Baukalk Ch ein Verhältnis Ci/Ch aufweisen, das im Bereich von 1/2 bis 2/1 liegt.

6. Bindemittel für den Straßenbau nach einem der vorhergehenden Ansprüche, **dadurch gekennzeichnet, dass** es Folgendes umfasst, als gewichtsmäßiger Gehalt im wasserfreien Bindemittel:
- 10 % bis 45 % an zerkleinertem Glas,
- 25 % bis 70 % an Metakaolin,
- 1 % bis 20 % an Zement, und
- 1 % bis 20 % an Baukalk.

7. Bindemittel für den Straßenbau nach dem vorhergehenden Anspruch, **dadurch gekennzeichnet, dass** es Folgendes umfasst, als gewichtsmäßiger Gehalt im wasserfreien Bindemittel:
- 30 % bis 40 % an zerkleinertem Glas, vorzugsweise 38 %,
- 30 bis 50 % an Metakaolin, vorzugsweise 38 %,
- 5 % bis 10 % an Zement, vorzugsweise 8 %, und
- 10 % bis 20 % an Baukalk, vorzugsweise 16 %.

8. Bindemittel für den Straßenbau nach einem der vorhergehenden Ansprüche, **dadurch gekennzeichnet, dass** das Metakaolin 60 % bis 70 % an Siliziumdioxid SiO₂ und 25 % bis 40 % an Aluminiumoxid Al₂O₃ enthält.

9. Bindemittel für den Straßenbau nach einem der vorhergehenden Ansprüche, **dadurch gekennzeichnet, dass** es sich bei dem zerkleinerten Glas um Kalknatronsilikatglas handelt.

10. Bindemittel für den Straßenbau nach einem der vorhergehenden Ansprüche, **dadurch gekennzeichnet, dass** das zerkleinerte Glas aus den Glassorten mit hydrophobem Charakter oder den Glassorten mit hydrophilem Charakter ausgewählt ist.

11. Mörtel zum Aufbringen auf einen Straßenkörper, **dadurch gekennzeichnet, dass** er aus Sand und aus Wasser in Mischung mit einem Bindemittel nach einem der vorhergehenden Ansprüche besteht.

12. Mörtel nach dem vorhergehenden Anspruch, **dadurch gekennzeichnet, dass** das Verhältnis der Volumina an Wasser / Bindemittel im Bereich von 0,5 bis 1,5 liegt.

13. Mörtel nach Anspruch 11 oder 12, **dadurch gekennzeichnet, dass** es sich bei dem Sand um Quarzsand oder Kalksand handelt.

14. Anwendung eines Mörtels nach einem der Ansprüche 11 bis 13 bei der Behandlung von Böden und Fahrbahnen.

## Claims

1. Road binder, **characterized in that** it comprises crushed glass, metakaolin, cement and lime, the total content by weight of crushed glass and metakaolin being between 70% and 90%, with respect to the dry binder.

2. Road binder according to claim 1, **characterized in that** the total content by weight of crushed glass and metakaolin is between 75% and 80%, with respect to the dry binder.

3. Road binder according to claim 1 or 2, **characterized in that** the content by weight of crushed glass, V, and the content by weight of metakaolin, MK, are in a ratio V/MK ranging from 20/80 to 60/40.

4. Road binder according to the preceding claim, **characterized in that** the content by weight of crushed glass, V, and the content by weight of metakaolin, MK, are in a ratio V/MK ranging from 45/55 to 55/45, and preferably 50/50.

5. Road binder according to one of the preceding claims, **characterized in that** the content by weight of cement, Ci, and the content by weight of lime, Ch, are in a ratio Ci/Ch ranging from 1/2 to 2/1.

6. Road binder according to one of the preceding claims, **characterized in that** it comprises, in content by weight in the dry binder:
- 10% to 45% crushed glass,
- 25% to 70% metakaolin,
- 1% to 20% cement, and
- 1% to 20% lime.

7. Road binder according to the preceding claim, **characterized in that** it comprises, in content by weight in the dry binder:
- 30% to 40% crushed glass, preferably 38%,
- 30% to 50% metakaolin, preferably 38%,
- 5% to 10% cement, preferably 8%, and
- 10% to 20% lime, preferably 16%.

8. Road binder according to one of the preceding claims, **characterized in that** the metakaolin comprises 60% to 70% silica SiO₂, and 25% to 40% aluminum oxide Al₂O₃.

9. Road binder according to one of the preceding claims, **characterized in that** the crushed glass is a soda-lime silicate glass.

10. Road binder according to one of the preceding claims, **characterized in that** the crushed glass is chosen from the hydrophobic glasses or hydrophilic glasses.

11. Mortar designed to be applied on highways, **characterized in that** it consists of sand and water mixed with a binder according to one of the preceding claims.

12. Mortar according to the preceding claim, **characterized in that** the ratio of the water/binder volumes is between 0.5 and 1.5.

13. Mortar according to claim 11 or 12, **characterized in that** the sand is siliceous sand or calcareous sand.

14. Application of a mortar according to one of claims 11 to 13 for the treatment of ground surfaces and road surfaces.
